# EUROPÄISCHE PATENTSCHRIFT

(11) **EP 3 590 150 B1**
(45) Veröffentlichungstag und Bekanntmachung des Hinweises auf die Patenterteilung: **04.05.2022**
(21) Anmeldenummer: 19725677.9
(22) Anmeldetag: 16.05.2019
(51) Int. Cl.: H01Q 1/22, H01Q 13/10, H02B 1/30

(54) **ELEKTROTECHNISCHE EINRICHTUNG SOWIE ABDECKUNG FÜR EINEN WARTUNGSZUGANG EINER DERARTIGEN EINRICHTUNG**
ELEKTROTECHNICAL DEVICE AS WELL AS COVER FOR A MAINTANENCE ACCESS OF SUCH A DEVICE
DISPOSITIF ÉLECTROTECHNIQUE AINSI QUE UN ACCÈS D'ENTRETIEN D'UN TEL DISPOSITIF

(30) Priorität: 23.05.2018 DE 202018102865 U; 06.11.2018 DE 102018127674; 30.01.2019 DE 102019102386
(43) Veröffentlichungstag der Anmeldung: 08.01.2020
(73) Patentinhaber: Desay SV Automotive Europe GmbH, 99428 Weimar OT Legefeld (DE)
(72) Erfinder: HERMANN, Lukas, 99423 Weimar (DE); HARZ, Thomas, 38120 Braunschweig (DE); BULBIN, Yury, 07407 Rudolstadt (DE)
(74) Vertreter: Kruspig, Volkmar
(86) Internationale Anmeldenummer: PCT/EP2019/062633
(87) Internationale Veröffentlichungsnummer: WO 2019/224101

(56) Entgegenhaltungen:
- DE-A1-102009 044 046
- JP-A- 2013 207 967
- JP-B2- 3 617 218
- US-A1- 2006 198 085
- US-A1- 2010 321 253

## Beschreibung

Die Erfindung betrifft eine elektrotechnische Einrichtung, bestehend aus einem leitfähigen oder mit einer leitfähigen Beschichtung versehenen metallischen Gehäuse zur Aufnahme von elektronischen Komponenten, wobei das Gehäuse mindestens eine Zugangsöffnung aufweist, welche verschließbar ist, gemäß Patentanspruch 1.

Aus dem deutschen Gebrauchsmuster DE 20 2016 002 294 U1 ist eine elektronische Vorrichtung mit einer Metallgehäusewand, die eine Grundplatte bildet, vorbekannt. Die Metallgehäusewand weist einen Schlitz auf, der ein Schlitzantennenresonanzelement für eine Hybridantenne bildet. Darüber hinaus ist ein Antennenresonanzelement für die Hybridantenne und eine abstimmbare Komponente zur Einstellung der Hybridantenne vorhanden. Bevorzugt kommt ein planares invertierendes F-Antennenresonanzelement als indirekte Einspeisestruktur für das Schlitzantennenresonanzelement zur Anwendung.

Bei den elektronischen Vorrichtungen gemäß DE 20 2016 002 294 U1 handelt es sich um tragbare Computer und Mobiltelefone, welche in der Lage sind, drahtlos, zum Beispiel über eine Bluetooth-Schnittstelle mit anderen tragbaren Geräten zu kommunizieren. Die Unterbringung hierfür notwendiger Antennen muss die hohe Packungs- und Bauelementdichte im entsprechenden Mobiltelefon berücksichtigen und darüber hinaus sicherstellen, dass durch derartige Schlitzantennen das Eindringen von Staub, Feuchtigkeit oder dergleichen wirksam verhindert wird.

Bei der elektronischen Vorrichtung, ausgebildet als Mobiltelefon gemäß DE 20 2016 006 358 U1, wird wiederum von einem metallischen Gehäuse ausgegangen. Eine Nicht-Millimeterwellenantenne weist einen dielektrischen Spalt auf, welcher leitende Nicht-Millimeterwellenantennenstrukturen voneinander trennt, wobei der dielektrische Spalt der Nicht-Millimeterwellenantenne ein Fenster für eine Millimeterwellenantenne bildet. Die Millimeterwellenantenne ist innerhalb des Gehäuses montiert und empfängt hochfrequente Signale durch das vorerwähnte Antennenfenster. Das Antennenfenster stellt sich als kunststoffgefüllte Öffnung im Metallgehäuse dar.

Die DE 10 2013 114 205 A1 offenbart eine Schlitzantenne und deren Verwendung in einer Informationssendevorrichtung. Die Informationssendevorrichtung ist ein tragbarer Computer oder aber auch ein Mobiltelefon. Die vorgestellte Schlitzantenne weist wenigstens einen Schlitz auf, welcher an einer Ecke und einem Rand des leitfähigen Gehäuses ausgebildet ist. Der Schlitz kann auch an zwei oder mehr Seiten ausgebildet werden, welche die Seiten und die Unterseite an der Ecke und dem Rand des leitfähigen Gehäuses aufweisen.

Aus der JP 2013-207967 ist eine elektrotechnische Einrichtung bekannt, die ein metallisches Gehäuse und eine im Gehäuse befindliche Sendeeinrichtung aufweist. Die Abstrahlung des Signals erfolgt hierbei über eine hinter Lüftungsschlitzen angebrachte Antenne.

Zur Uberwachung des Energieverbrauches aber auch im Bereich der Energiegewinnung durch photovoltaische Einrichtungen muss zunehmend eine aktuelle Erfassung von Verbrauchs- oder Erzeugungsdaten möglich werden. Diesbezüglich kommen sogenannte Smart-Meter zum Einsatz, welche beispielsweise über den Tagesverlauf den Energieverbrauch bewerten oder aber Daten dahingehend liefern, welche erzeugte Energiemenge durch eine Photovoltaikanlage bereitsteht, um gezielt Verbraucher einzuschalten oder auch vom Netz zu trennen. Eine Übertragung dieser Daten erfolgt drahtlos zu einer Leiteinheit, welche dann in der Lage ist, die vorerwähnten, kurz umrissenen Steuerungsaufgaben zu lösen.

Üblicherweise kommen Smart-Meter in Zählerkästen zum Einsatz, wobei die Problematik besteht, dass derartige schrankartige Gehäuse zur Aufnahme elektrotechnischer Komponenten aus einem metallischen, leitfähigen Material bestehen. Ein solches metallisches Gehäuse schirmt gegen hochfrequente Strahlung ab, so dass bisher die Notwendigkeit bestand, außerhalb des Gehäuses diskrete Sendeeinrichtungen bzw. entsprechende Antennen zur drahtlosen Datenübertragung vorzusehen.

Aus dem Vorgenannten ist es Aufgabe der Erfindung, eine weiterentwickelte elektrotechnische Einrichtung, bestehend aus einem leitfähigen oder mit einer leitfähigen Beschichtung versehenen, insbesondere metallischen Gehäuse zur Aufnahme von elektronischen Komponenten anzugeben, welche derart modifiziert ist, dass ohne zusätzlichen Aufwand Daten, die zum Beispiel von einem Smart-Meter geliefert werden, drahtlos an die Umgebung, beispielsweise zu einem WLAN-Knoten, einem entsprechendem drahtlosen Netz oder zu einer Leitzentrale übertragen werden können.

Die Lösung der Aufgabe der Erfindung erfolgt mit der Lehre gemäß der Merkmalskombination nach Anspruch 1, wobei die Unteransprüche mindestens zweckmäßige Ausgestaltungen und Weiterbildungen darstellen.

Erfindungsgemäß ist mindestens eine der elektronischen Komponenten als Messdatensendeeinrichtung, zum Beispiel als Smart-Meter-Gateway, ausgebildet und befindet sich innerhalb des metallischen Gehäuses oder steht mit Komponenten innerhalb dieses Gehäuses in Verbindung.

Es liegt im Sinne der Erfindung, dass die Messdatensendeeinrichtung ähnlich eines Transceivers in der Lage ist, Daten von extern zu empfangen und zu verarbeiten, um beispielsweise auf einen externen Anforderungsbefehl eine Datenauslesung mit anschließender Datensendung vorzunehmen.

Die zu sendenden aber auch die zu empfangenden Daten werden drahtlos übertragen. Die Messdatensendeeinrichtung bzw. der Transceiver steht diesbezüglich mit einer Erreger- und Einspeiseeinrichtung in Verbindung.

Eine an der Wandung oder in der Wandung des Gehäuses vorgesehene Öffnung, welche eine insbesondere lösbare Abdeckung aufweist, wird erfindungsgemäß zur Aufnahme einer Erreger- und Einspeiseeinrichtung ertüchtigt.

Die Erreger- und Einspeiseeinrichtung wird bevorzugt abdeckungsinnenseitig im Bereich der Öffnung angeordnet.

Mithin entsteht im Abdeckungsbereich ein Antennenstrahler, der in an sich bekannter Weise erregt werden kann.

Mit dem Aufsetzen der Abdeckung in die Öffnung des Gehäuses ist von außen die gewünschte Wirkung als Antennenstrahler nicht mehr ohne Weiteres erkennbar.

Bevorzugt sind abgedeckte bzw. abdeckbare Öffnungen zur Aufnahme des Antennenstrahlers im Bereich einer Seitenwandung und/oder einer Klappe oder einer Tür des Gehäuses ausgebildet.

So kann zum Beispiel zum Zweck des Nachrüstens, eine öffnungsfreie Tür durch eine Tür mit Öffnung ersetzt und mithin das Gehäuse entsprechend aufgerüstet werden.

Das Gehäuse ist bevorzugt als Schaltschrank, Zählerschrank oder Hausanschlusskasten oder dergleichen schrankähnliches Gebilde ausgeführt.

Die Erreger- und Einspeiseeinrichtung kann als Leiterplatte mit entsprechender Erregerstruktur im Sinne eines Leiterstreifens bzw. einer Leiterfläche realisiert und mit der Abdeckung verbunden oder aber durch Umspritzen oder Umgießen mit einem typischen Kunststoffmaterial für Abdeckungen realisiert werden.

Die Erreger- und Einspeiseeinrichtung bzw. der Antennenstrahler kann klemmend, klebend aber auch rastend, das heißt stoffschlüssig, formschlüssig und/oder kraftschlüssig mit der Abdeckung verbunden oder aber auch mit dieser einstückig ausgebildet werden.

Bei der Abdeckung kann es sich um eine typische abnehmbare Platte zum Einführen von Anschlusskabeln oder dergleichen in ein Schaltschrankgehäuse handeln. Ebenso ist eine Abdeckung, vorgesehen als Wartungszugang, möglich.

Derartige Abdeckungen sind üblicherweise einrastend mit einer entsprechenden Ausnehmung in der Gehäusewandung verbunden. In vielen Fällen sind Normgehäuse mit mehreren Abdeckungen versehen, um je nach Erfordernissen vor Ort entsprechende Kabelein- und Kabelausführungen umsetzen zu können.

Ein Grundgedanke der Erfindung besteht also darin, eine an sich bereits vorgesehene und vorhandene Abdeckung so zu ertüchtigen, dass diese einen Antennenstrahler aufnimmt, der mit dem bereits erwähnten Smart-Meter-Gateway in Verbindung steht. Der vorzugsweise als kupferkaschierte und strukturierte Leiterplatte ausgebildete Strahler, kann durch Einclipsen bevorzugt mit der Unterseite, das heißt mit der zum Gehäuseinneren weisenden Oberfläche der Abdeckung verbunden werden.

Alternativ besteht die Möglichkeit, eine Antennenstrahlerstruktur mit dem Material der Abdeckung, zum Beispiel ein Kunststoffmaterial, zu umspritzen, so dass ein entsprechendes einstückiges Bauteil entsteht. Dieses Bauteil kann dann wiederum bevorzugt zur Innenseite des Gehäuses gerichtet eine Anschlussbuchse oder einen Anschlussstecker zur Realisierung der hochfrequenzseitigen Verbindung aufweisen.

Unter Nutzung der erfindungsgemäßen Idee können also Standardgehäuse mit Standardabdeckungen für den Fall des Einsatzes zum drahtlosen Informationsaustausch ertüchtigt oder nachgerüstet werden.

Ein weiterer Erfindungsgedanke besteht darin, dass das Gehäuse mindestens eine weitere Öffnung oder Unterbrechung einer leitfähigen Gehäusebeschichtung aufweist, die in elektromagnetischer Kopplung zum Antennenstrahler steht, so dass resonanzbedingt mindestens Teile des Gehäuses die Antennenstrahlerwirkfläche vergrößern.

Üblicherweise können Antennen nicht ohne Weiteres in unmittelbarer Nähe von metallischen Flächen betrieben werden. In Metallnähe gehen Antennen mit der metallischen Fläche eine Kopplung ein, die zu einer starken Verschlechterung der Antennenanpassung führt. Mithin verschlechtert sich das Stehwellenverhältnis und es wird der Energieübertrag bei der Überführung elektromagnetischer Wellen in den umgebenden Freiraum reduziert.

Die erfindungsgemäße Lösung nutzt hingegen gezielt diese an sich negativen Kopplungseffekte zum umliegenden metallischen Material aus, um die Antennenwirkfläche zu vergrößern.

Insofern überträgt der vorgesehene Antennenstrahler die Hochfrequenzenergie auf alle umliegenden Metallflächen, welche sich in einem vorgegebenen sphärischen Abstand, von zum Beispiel 30 cm, von der Antenne entfernt befinden.

In diesem Bereich wird nunmehr das Gehäuse der Einrichtung selbst wirkungsseitig zur Antenne und ist mithin in der Lage, ebenfalls elektromagnetische Wellen abzustrahlen bzw. aufzunehmen. Die Vergrößerung der Wirkfläche durch das Gehäuse der elektrotechnischen Einrichtung verbessert die Antennenanpassung und optimiert den Energietransport zwischen der Messdatensendeeinrichtung über die hochfrequenzseitige Verbindung zum Antennenstrahler und darüber hinaus in den umgebenden Freiraum. Die diesbezügliche zusätzliche mindestens eine Öffnung im Gehäuse weist frequenzdefinierte Aussparungskanten auf, die für die Resonanzbildung, insbesondere im unteren Frequenzband von Vorteil sind. Auf diese Weise gelingt die gewünschte, nicht störende, positive Einkopplung in leitfähige, insbesondere metallische Komponenten des Gehäuses.

Die weitere Öffnung oder Unterbrechung der leitfähigen Beschichtung des Gehäuses befindet sich bevorzugt im Bereich der Klappe oder der Tür und/oder im Bereich von Seitenwänden oder der Rückwand des Gehäuses.

Der erfindungsgemäße Antennenstrahler ist auf einen Frequenzbereich von im Wesentlichen 600 bis 6000 MHz abgestimmt.

Erfindungsgemäß ist zwischen der Ebene der Leiterstreifen oder der Leiterfläche des Antennenstrahlers und der durch die weitere Öffnung oder Unterbrechung der leitfähigen Beschichtung gebildeten Ebene ein von 0° abweichender Winkel eingehalten. Bei einem bevorzugten Beispiel befindet sich die weitere Öffnung im Wesentlichen senkrecht zur Leiterfläche bzw. zum Leiterstreifen des Antennenstrahlers, zum Beispiel an der Rückseite des Gehäuses oder Schaltschrankes.

Die Erfindung soll nachstehend anhand eines Ausführungsbeispieles sowie unter Zuhilfenahme von Figuren näher erläutert werden.

Hierbei zeigen:

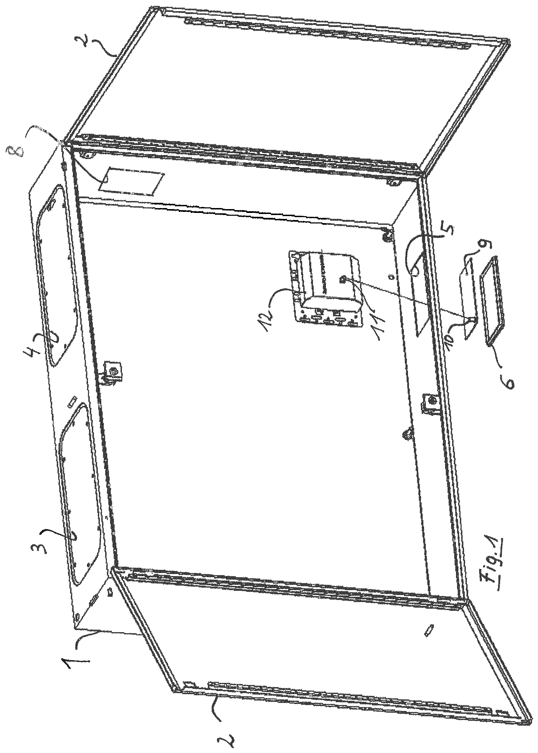

- Fig. 1: eine perspektivische Darstellung eines typischen Schaltschrankes mit einem im Inneren befindlichen Smart-Meter-Gateway sowie einer modifizierten Abdeckung, welche einen Antennenstrahler aufnimmt, wobei die Abdeckung eine Öffnung an der Unterseite des Gehäuses verschließt;

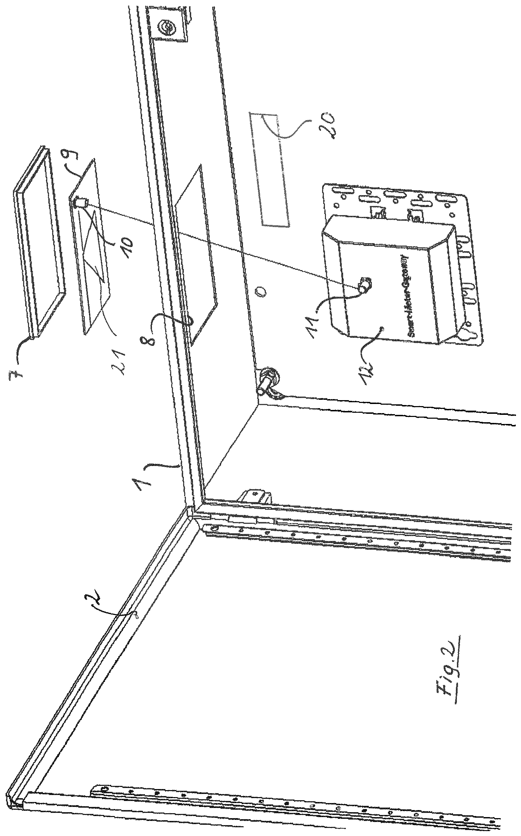

- Fig. 2: eine Darstellung ähnlich derjenigen nach Fig. 1, jedoch mit einer Abdeckung an der Oberseite eines Gehäuses, die durch einen Leiterplattenstrahler ertüchtigt ist, und zwar mit angedeuteten Anschlusssteckern oder Anschlussbuchsen zur hochfrequenzseitigen Verbindung des Antennenstrahlers mit dem Smart-Meter-Gateway.

Die Figuren 1 und 2 gehen von der beispielhaften Darstellung eines typischen metallischen Schaltschrankes aus, der ein Grundgehäuse 1 sowie schwenkbar gelagerte Türen 2 aufweist.

Bei einem derartigen Standard-Schaltschrank sind sowohl auf der Oberseite verschließbare Öffnungen 3 und 4 als auch mindestens eine derartige Öffnung 5 an der Unterseite vorhanden.

Die Öffnungen sind beispielsweise durch ausbrechbare gestanzte Abschnitte gebildet oder weisen wie in den Figuren 1 und 2 gezeigt jeweils eine Abdeckung 6 aus einem Kunststoffmaterial auf.

Wenn zum Beispiel die untere Abdeckung 6 und Figur 1 bzw. gemäß Figur 2 die obere Abdeckung 7 entfernt wird, ist ein Zugang zur entsprechenden Öffnung 5 bzw. 8 im Gehäusegrundkörper 1 geschaffen.

Diese Zugänge werden üblicherweise genutzt, um elektrische Anschlüsse in das Gehäuse ein- bzw. auszuführen.

Die erfindungsgemäße Lösung geht nun davon aus, die jeweilige Abdeckung 6 bzw. 7 so zu ertüchtigen, dass selbige eine Leiterplatte 9 mit einer Antennenstrahlerstruktur 21 aufnimmt.

Die Leiterplatte 9 kann zum Beispiel mit der Innenseite der Abdeckung 6 oder 7 klebend, das heißt stoffschlüssig aber auch form- oder kraftschlüssig verbunden werden.

Alternativ besteht die Möglichkeit, die Leiterplatte mit Strahler zu Umspritzen und insofern eine Abdeckung zu gestalten, die unmittelbar durch Stoffschluss oder Kraftschluss aber auch durch Formschluss mit der entsprechenden Ausnehmung 5 oder 8 im Gehäuse 1 verbindbar ist.

Zumindest ein Stecker oder eine Buchse 10 dient dem Anschluss eines Verbindungskabels, insbesondere eines Koaxialkabels, mit dem Ausgang bzw. der Ausgangsbuchse 11 eines im Inneren des Gehäuses angeordneten Smart-Meter-Gateways 12.

Die Figur 1 zeigt eine weitere Ausnehmung 8 in einer Seitenwand des Gehäuses 1. Diesbezüglich besteht die Möglichkeit, je nach örtlichen Gegebenheiten wahlweise eine Abdeckung 6 mit Antennenstrahler 9 entweder im Bereich der Ausnehmung 5 und/oder im Bereich der Ausnehmung 8 anzuordnen.

Gemäß der Darstellung nach Figur 2 ist unterhalb einer Ausnehmung 8 in der Deckfläche des Gehäuses 1 eine weitere Öffnung 20 ausgebildet. Diese Öffnung kann bei einem metallischen Gehäuse als entsprechende Aussparung ausgeführt oder aber bei einem Gehäuse mit einer leitfähigen Beschichtung durch Entfernen dieser leitfähigen Beschichtung realisiert werden. Die weitere Öffnung 20 steht in elektromagnetischer Kopplung zum Antennenstrahler 9, respektive der dortigen Leiterfläche bzw. Leiterstreifen 21. Resonanzbedingt wird Hochfrequenzenergie auf mindestens Teile des Gehäuses 1 übertragen, so dass sich die Wirkfläche des Antennenstrahlers erhöht und sich das Stehwellenverhältnis, insbesondere im hier relevanten unteren Frequenzbereich, verbessert.

Bei einer beispielhaft realisierten Strahlerstruktur und Modifikation des Gehäuses der elektrotechnischen Einrichtung im Sinne der vorliegenden Erfindungslehre liegt das Stehwellenverhältnis über alle Frequenzbereiche zwischen 1,5 und 2,5. Der Antennenstrahler ist dabei so konzipiert, dass alle Mobilfunkfrequenzbänder einschließlich dem WLAN-Frequenzband abgedeckt werden. Die diesbezüglichen Frequenzen liegen zwischen 689 und 6000 MHz.

## Patentansprüche

1. Elektrotechnische Einrichtung, bestehend aus einem leitfähigen oder mit einer leitfähigen Beschichtung versehenen Gehäuse (1) zur Aufnahme von elektronischen Komponenten, wobei das Gehäuse (1) mindestens eine Zugangsöffnung (5; 8) aufweist, welche verschließbar ist, weiterhin mindestens eine der elektronischen Komponenten als Messdatensendeeinrichtung (12) ausgebildet ist, wobei die zu sendenden und/oder zu empfangenden Daten drahtlos in die Umgebung der Einrichtung übertragbar sind und die Messdatensendeeinrichtung (12) mit einer Erreger- und Einspeiseeinrichtung in Verbindung steht,
wobei
das Mittel zum Verschließen der Zugangsöffnung (5; 8) eine Abdeckung (6; 7) ist, welche einen Antennenstrahler (9) aufnimmt, der Bestandteil der Erreger- und Einspeiseeinrichtung ist oder diese selbst bildet, und das Gehäuse (1) mindestens eine weitere Öffnung (20) oder eine Unterbrechung der leitfähigen Beschichtung aufweist, die in elektromagnetischer Kopplung zu dem Antennenstrahler (9) steht, so dass resonanzbedingt mindestens Teile des Gehäuses (1) die Antennenstrahler-Wirkfläche vergrößern, Hochfrequenzenergie auf das Gehäuse (1) übertragen und das Stehwellenverhältnis verbessert ist.

2. Elektrotechnische Einrichtung nach Anspruch 1,
**dadurch gekennzeichnet, dass**
die Zugangsöffnung (5; 8) im Bereich einer Klappe oder einer Tür und/oder von Seitenwänden oder einer Rückwand des Gehäuses (1) ausgebildet ist.

3. Elektrotechnische Einrichtung nach Anspruch 2,
**dadurch gekennzeichnet, dass**
die weitere Öffnung (20) oder Unterbrechung der leitfähigen Beschichtung im Bereich der Klappe oder Tür und/oder von Seitenwänden oder der Rückwand des Gehäuses (1) ausgebildet ist.

4. Elektrotechnische Einrichtung nach einem der vorangegangenen Ansprüche,
**dadurch gekennzeichnet, dass**
das Gehäuse (1) als Schaltschrank, Zählerschrank, Hausanschlusskasten oder dergleichen Schrankgebilde ausgeführt ist.

5. Elektrotechnische Einrichtung nach einem der vorangegangenen Ansprüche,
**dadurch gekennzeichnet, dass**
die Erreger- und Einspeiseeinrichtung als Leiterplatte mit Erregerstruktur (21) ausgeführt ist, welche mit der zum Gehäuseinneren weisenden Seite der Abdeckung (6; 7) verbunden ist.

6. Elektrotechnische Einrichtung nach einem der vorangegangenen Ansprüche,
**dadurch gekennzeichnet, dass**
die Erreger- und Einspeiseeinrichtung klemmend, klebend oder durch Umspritzen an der Abdeckung (6, 7) fixiert oder mit dieser verbunden ist.

7. Elektrotechnische Einrichtung nach Anspruch 5,
**dadurch gekennzeichnet, dass**
die Leiterplatte mit Erregerstruktur (21) form- oder kraftschlüssig mit der Abdeckung (6; 7) verbunden ist.

8. Elektrotechnische Einrichtung nach einem der vorangegangenen Ansprüche,
**dadurch gekennzeichnet, dass**
die Abdeckung (6; 7) aus einem dielektrischen, nicht leitfähigen, insbesondere Kunststoffmaterial besteht.

9. Elektrotechnische Einrichtung nach einem der vorangegangenen Ansprüche,
**dadurch gekennzeichnet, dass**
der Antennenstrahler mit Erregerstruktur (21) auf einen Frequenzbereich von 600 bis 6000 MHz abgestimmt ist.

10. Elektrotechnische Einrichtung nach Anspruch 5,
**dadurch gekennzeichnet, dass**
der Antennenstrahler aus mindestens einer, in einer Ebene angeordneten Leiterfläche oder einem Leiterstreifen besteht, welcher die Erregerstruktur (21) bildet.

11. Elektrotechnische Einrichtung nach Anspruch 10,
**dadurch gekennzeichnet, dass**
zwischen der Ebene der Leiterstreifen oder der Leiterfläche und der durch die weitere Öffnung (20) oder Unterbrechung der leitfähigen Beschichtung gebildeten Ebene ein von 0° abweichender Winkel eingehalten ist.

## Claims

1. An electrotechnical device, consisting of a conductive housing (1) or a housing (1) provided with a conductive coating, for accommodating electronic components, wherein the housing (1) has at least one access opening (5; 8), which is closable, furthermore at least one of the electronic components being formed as a measurement data transmission device (12), wherein the data to be transmitted and/or received can be transmitted in a wireless manner into the environment of the device, and the measurement data transmission device (12) being in communication with an exciter and feed-in device,
wherein
the means for closing the access opening (5; 8) is a cover (6; 7), which accommodates an antenna radiator (9) which is an integral part of the exciter and feed-in device or forms it itself, and the housing (1) has at least one further opening (20) or an interruption of the conductive coating, which is in electromagnetic coupling to the antenna radiator (9) so that, caused by resonance, at least parts of the housing (1) increase the effective area of the antenna radiator, transmit high-frequency energy to the housing (1), and the standing wave ratio is improved.

2. The electrotechnical device according to claim 1,
**characterized in that**
the access opening (5; 8) is formed in the area of a flap or a door and/or of sidewalls or a rear wall of the housing (1).

3. The electrotechnical device according to claim 2,
**characterized in that**
the further opening (20) or interruption of the conductive coating is formed in the area of the flap or door and/or of sidewalls or the rear wall of the housing (1).

4. The electrotechnical device according to any one of the preceding claims,
**characterized in that**
the housing (1) is configured as a switch cabinet, a meter cabinet, a domestic junction box or a similar cabinet structure.

5. The electrotechnical device according to any one of the preceding claims,
**characterized in that**
the exciter and feed-in device is configured as a circuit board having an exciter structure (21) connected to the side of the cover (6; 7) facing towards the housing interior.

6. The electrotechnical device according to any one of the preceding claims,
**characterized in that**
the exciter and feed-in device is fixed or connected with the cover (6, 7) in a clamping, adhesive or overmoulding manner.

7. The electrotechnical device according to claim 5,
**characterized in that**
the circuit board having an exciter structure (21) is in a positive or frictional connection with the cover (6; 7).

8. The electrotechnical device according to any one of the preceding claims,
**characterized in that**
the cover (6; 7) consists of a dielectric, non-conductive, in particular plastic material.

9. The electrotechnical device according to any one of the preceding claims,
**characterized in that**
the antenna radiator having the exciter structure (21) is tuned to a frequency range of 600 to 6000 MHz.

10. The electrotechnical device according to claim 5,
**characterized in that**
the antenna radiator consists of at least one conductor surface or a conductor stripe arranged in one plane and forming the exciter structure (21).

11. The electrotechnical device according to claim 10,
**characterized in that**
between the plane of the conductor stripes or the conductor surface and the plane formed by the further opening (20) or interruption of the conductive coating, an angle deviating from 0° is complied with.

## Revendications

1. Dispositif électrotechnique, constitué d'un boîtier (1) conducteur ou pourvu d'un revêtement conducteur, destiné à recevoir des composants électroniques,
dans lequel
le boîtier (1) présente au moins une ouverture d'accès (5 ; 8) qui peut être refermée,
en outre, l'un au moins des composants électroniques est réalisé sous forme de dispositif d'émission de données de mesure (12),
les données à émettre et/ou à recevoir sont susceptibles d'être transmises sans fil dans l'environnement du dispositif, et
le dispositif d'émission de données de mesure (12) est en liaison avec un dispositif d'excitation et d'alimentation,
le moyen de fermeture de l'ouverture d'accès (5 ; 8) est un couvercle (6 ; 7) qui reçoit un élément rayonnant d'antenne (9) qui fait partie du dispositif d'excitation et d'alimentation ou qui forme lui-même ce dispositif, et
le boîtier (1) présente au moins une autre ouverture (20) ou une interruption du revêtement conducteur qui est en couplage électromagnétique avec l'élément rayonnant d'antenne (9), de sorte qu'en raison de la résonance, au moins des parties du boîtier (1) augmentent la surface active de l'élément rayonnant d'antenne, l'énergie haute fréquence est transmise au boîtier (1) et le rapport d'ondes stationnaires est amélioré.

2. Dispositif électrotechnique selon la revendication 1,
**caractérisé en ce que**
l'ouverture d'accès (5 ; 8) est formée dans la zone d'un volet ou d'une porte et/ou de parois latérales ou d'une paroi arrière du boîtier (1).

3. Dispositif électrotechnique selon la revendication 2,
**caractérisé en ce que**
l'autre ouverture (20) ou interruption du revêtement conducteur est formée dans la zone du volet ou de la porte et/ou de parois latérales ou de la paroi arrière du boîtier (1).

4. Dispositif électrotechnique selon l'une des revendications précédentes,
**caractérisé en ce que**
le boîtier (1) est réalisé sous forme d'armoire de distribution, d'armoire de comptage, de coffret de raccordement domestique ou de structure d'armoire similaire.

5. Dispositif électrotechnique selon l'une des revendications précédentes,
**caractérisé en ce que**
le dispositif d'excitation et d'alimentation est réalisé sous forme de carte à circuit imprimé ayant une structure d'excitation (21) qui est reliée à la face du couvercle (6 ; 7) orientée vers l'intérieur du boîtier.

6. Dispositif électrotechnique selon l'une des revendications précédentes,
**caractérisé en ce que**
le dispositif d'excitation et d'alimentation est fixé au couvercle (6, 7) ou relié à celui-ci par serrage, par collage ou par surmoulage.

7. Dispositif électrotechnique selon la revendication 5,
**caractérisé en ce que**
la carte à circuit imprimé ayant une structure d'excitation (21) est reliée au couvercle (6 ; 7) par coopération de forme ou de force.

8. Dispositif électrotechnique selon l'une des revendications précédentes,
**caractérisé en ce que**
le couvercle (6 ; 7) est constitué d'un matériau diélectrique et non conducteur, en particulier d'un matériau plastique.

9. Dispositif électrotechnique selon l'une des revendications précédentes,
**caractérisé en ce que**
l'élément rayonnant d'antenne ayant une structure d'excitation (21) est accordé sur une plage de fréquences de 600 à 6000 MHz.

10. Dispositif électrotechnique selon la revendication 5,
**caractérisé en ce que**
l'élément rayonnant d'antenne est constitué d'au moins une surface conductrice ou d'une bande conductrice disposée dans un plan et formant la structure d'excitation (21).

11. Dispositif électrotechnique selon la revendication 10,
**caractérisé en ce que**
un angle différent de 0° est maintenu entre le plan de la bande conductrice ou de la surface conductrice et le plan formé par l'autre ouverture (20) ou interruption du revêtement conducteur.
